# EUROPEAN PATENT APPLICATION

(11) **EP 4 650 642 A1**
(43) Date of publication of application: **19.11.2025**
(21) Application number: 24175560.2
(22) Date of filing: 13.05.2024
(51) Int. Cl.: F16L 55/165, B33Y 80/00, F16L 55/18, F16L 15/00, F16L 53/38, B29C 63/34

(54) **PRESSURIZING HEAD AND A PRESSURIZING HEAD CONNECTOR**

(71) Applicant: Sukitustukku Oy, 01150 Siipo, Söderkulla (FI)
(72) Inventor: Lokkinen, Juho Mikael, 01150 Söderkulla (FI); Josefsson, Jan Niklas, 01900 Nurmijärvi (FI)
(74) Representative: Väisänen, Olli Jaakko

(57) **Abstract**

Cured-in-place-pipe technology (CIPP) linings need to be pressurized. In order to provide an alternative structure for a pressurizing head for linings it is proposed that the pressurizing head (1) comprises a hollow lining connection section (2) that has: i) a lining receiving section (21) onto which a lining (5), such as used in pipe renovation by cured-in-place-pipe -technology (CIPP), may be inserted, ii) the lining receiving section (21) having a tightening section (210) where the outer surface has an essentially cylindrical surface such that the lining (5) may be fastened in an air- and water-tight manner using a ring clamp, for example, and
iii) a protrusion/notch (23) following the outer perimeter (22) of the lining receiving section (21) and neighboring the tightening section (210), for preventing slip of the lining from the lining receiving section (21).

The pressurizing head (1) further comprising a cap section (3) closing the pressurizing head (1), wherein the cap section (3) comprises at least one connection (30, 31, 32) for water or pressurized air
a) the pressurizing head (1) comprises or consists of a monolithic structure that forms a body of the cap section (3) and the lining receiving section (2) such that the monolithic structure comprises an outer shell (10), an inner shell (11) connected to each other;
b) the at least one connection (30, 31, 32) configured for a connector (34, 35, 36), preferably a metallic connector, that is air-tightly sealed to the monolithic structure; and
c) between the outer shell (10) and the inner shell (11) is an infill (12) that is located at least at the tightening section (210) and/or at the cap section (3) but preferably also between these, to stabilize the tightening section and the connector (34, 35, 36) of the at least one connection (30, 31, 32).

An independent patent claim for a pressurized head connector is also included.

## Description

### Field of the invention

The invention relates to pressurizing linings used in pipe renovation work, especially in the renovation of pipes by "cured-in-place-pipe" (CIPP) -technology, and/or to circulating water in the linings.

### Technical background

In CIPP technology, pipes to be renovated are normally grinded and cleaned , after which a lining that has been saturated with resin or other suitable chemicals is placed in the pipe with special machinery, such as a lining drum or some other installation method.

After the lining has been placed into the pipe to be renovated, it usually is pressurized with pressurized air. Alternatively or in addition, water may be circulated in the lining. Alternatively or in addition, hot air or steam may be lead in the lining. This is what the pressurizing head is necessary for.

Preferably, warm water may be used to circulate in the lining. The water is preferably introduced in the distal end of the lining. For this purpose, a water hose (typically of the type "garden hose") is entered in the lining after placing the lining into the pipe or the water hose can be lead in the lining during installation process of liner.

By running water into the distal end of the water hose, warm water may be introduced, warming the chemically treated lining and thus increasing the curing speed of resin or other chemical. Curing makes the CIPP reinforced pipe hard. The water may normally be let out of the hose through an outlet in the pressurizing head. Outcoming water may normally be re-warmed in separate device and after warming lead back water hose and to chemically treated lining.

Known pressurizing heads are made of metal, such as aluminum, by welding. One supplier for such products is Pipe Lining supply: https://pipeliningsupply.com/quick-heater/water-manifold/ https://pipeliningsupply.com/quik-heater/. Alternatively, such as in the manufacturing process of the present applicant, the pressurizing heads may be made by turning from solid plastic rod pieces with a lathe. These both methods are rather costly to manufacture.

### Objective of the invention

It is an objective of a first aspect of the invention to provide an alternative structure of a pressurizing head. This objective can be met with the pressurizing head according to independent claim 1.

An objective of a second aspect of the invention is to facilitate curing of the resin or other chemical in the lining. This objective can be met with a pressurizing head connector according to parallel independent claim 15.

The dependent claims describe advantageous embodiments of the first aspect.

### Advantages of the invention

A pressurizing head for linings, such as for used in pipe renovation by cured-in-place-pipe -technology comprises a hollow lining connection part that has:
i) a lining receiving section onto which a lining, such as used in pipe renovation by cured-in-place-pipe -technology (CIPP), may be inserted,
ii) the lining receiving section (3) having a tightening section where the outer surface has an essentially cylindrical surface such that the lining may be fastened in an air- and water-tight manner using a ring clamp, for example, and
iii) a protrusion/notch following the outer perimeter of the lining connection part and neighboring the tightening section, for preventing slip of the lining from the lining receiving section.

The pressurizing head further comprises a cap section for closing the pressurizing head, wherein the cap section comprises at least one connection for water or pressurized air .

Furthermore,
a) the pressurizing head (1) comprises or consists of a monolithic structure that forms the body of the cap section and the lining receiving section such that the monolithic structure comprises an outer shell, an inner shell connected to each other;
b) the at least one connection configured for a connector, preferably a metallic connector, that is air-tightly sealed to the monolithic structure; and
c) between the outer shell and the inner shell is an infill that is located at least at the tightening section and/or at the cap section but preferably also between these, to stabilize the tightening section and the connector of the at least one connection.

In this manner the infill can be used to stabilize and strenghten the pressurizing head at the tightening section and at the connector. These are the most critical parts and it may suffice to stabilize them; the pressurizing head may thus be constructed with less material but still be made sufficiently durable. Furthermore, by suitably selecting the infill, the mechanical properties of the pressurizing head can be adjusted as needed.

In contrast, the metallic (aluminum) pressure heads and also those manufactured by turning in a lathe, may require a lot of material in order to be stable enough for the tightening. Now the infill (or its amount) can vary spatially such that at the tightening section, a stiffer and/or more stable structure can be used.

Advantageously, it is possible that the infill may be constructed in several ways according to the actual need. One alternative is that the infill comprises empty space regions that absorbs small elastic deformation, preferably by accommodating inlet shape change because of the deformation into the empty space regions enables outer surface to be flexible to facilitate obtaining an air-tight or water-tight fastening of the lining by means of a ring clamp, especially such that the outer surface gives way to adapt to the shape of the ring clamp, obtaining air-tight or water-tight connection may be made easier.

Another alternative is that the infill is first made substantially empty and containing only some supportive structures between the outer shell and the inner shell, and then the cavity for infill is filled by cast or injection so that the cured infill forms a solid structure but gives the pressure head the strenght / stiffnes properties as wanted. In previous metallic (aluminium) pressure heads and also in those manufactured by turning a solid plastic rod in a lathe, the material is solid and its thickness is normally uniform. In contrast, the empty space regions may not only save material and increase stiffness of the shell structure but also may absorb at least some of the deformation that results from the tightening such as from the use of a ring clamp, resulting better grip of the lining.

Advantageously, the monolithic structure may comprise plastics, preferably polyethylene terephthalate glycol (PETG). This enables high strength and durability. It also has good water resistance. In case an additional heat resistence is needed, then PETG-carbon is the preferred material.

Also due to other reasons, preferably, the plastics may be fiber reinforced, preferably carbon fiber reinforced plastics. This increases the stiffness and durability of the structure. The pressure head is used in harsh construction site circumstances and the usage is normally far from gentle use. Therefor it is desired to have a pressure head that is lightweight but durable and absorbs shocks caused by dropping the pressure head to a hard concrete wall or dragging it along abrasive surfaces. Normally a working pressure in a method using CIPP-technology inside the pressurizing head is normally in a range of 0.2 to 2 bar so the pressurizing head must also bear the load caused by this working pressure, together with a possible elevated temperature up to 80 °C. The material preferred herein, PETG-carbon, seem to fulfill these criteria.

The monolithic structure may be manufactured using 3D printing, preferably using fiber reinforced plastic filament (especially carbon fiber reinforced PETG). This enables an uncomplicated manner of manufacturing on the order. The 3D printing technology has advanced so much in recent years that the manufacturing cost (work + material) of the pressurizing head by 3D printing is already comparable to turning from solid plastic bar.

The cap section comprises at least one connection for water or pressurized air. In the embodiments there may be only one connection or there may be several connections, for example three connections. The connection may be done directly to the cap section material or there may be a separate bushing attached or connected to an opening in the cap section, for the connector to be attached. The bushing material may be selected according to the need, it may be for example metallic, fiber reinforced plastics or plastics.

The 3D printing is preferably carried out using carbon fiber reinforced plastic filament, especially PETG Carbon Fiber. This enables 3D printing of pressurizing heads of sufficient stiffness.

The metallic connector may be installed in a recess in the outer side of the cap section, which recess and connector preferably have a shape that facilitates form locking of the connector in place, and preferably a counterpiece especially a screw nut that is installed in the inner side of the cap section such that the connector and optionally also the counterpiece spans through the outer shell and the inner shell.

Alternatively or in addition, the cap section may comprise a hole surpassing the inner shell, the infill and the outer shell, and have a thread, to which the connector has been glued to implement the air-tight and/or water-tight sealing. The gluing of the connector, such as a metallic connector to the two-shell-plus-infill structure, together with the thread shape increases the durability of the pressurizing head.

The lining receiving section may comprise a sequence of at least two different diameters sections, preferably two or three different diameter sections, for different diameter linings, preferably selected in a range of 30 - 300 mm, for example selected from linings made to nominal diameters DN100, DN150 and DN 200. This enables the use of the same pressurizing head to pressurize a number of different diameter linings and thus increases the versatility of the pressurizing head.

Preferably, the smallest diameter section is furthest from the cap section and the largest diameter section is closest to the cap section. This simplifies the use of the pressurizing head.

Between the different diameter sections, the inner shell, the outer shell and the inlet may have a tapering form to implement a funnel-like shape. This may facilitate pulling the lining onto the lining receiving section. Further, especially if a 3D printing is used as manufacturing technology, the mechanical strength and stiffness of the pressurizing head between the different diameter sections may be increased. The funnel-like shape is preferably in an angle of 45° ± 15° in relation to the central axis of the rotationally symmetrical pressurizing head. This angle of the funnel may actually be a requirement for certain 3D printing technologies.

When using the pressure head, a lining may be attached to the lining receiving section and secured in place by a ring clamp or similar compression means. There may also be a water hose connected as explained above. And the pressurized air connection line and/or water inlet and water outlet lines may be connected too.

The pressurizing head may be used in pipe renovation by cured-in-place-pipe technology to pressurize pipe linings by air or to circulate water therein.

According to the second aspect of the invention, a pressurizing head connector for a pressurizing head (that preferably is according the first aspect of the invention) comprises a body having a thread comprising a pressurized air inlet and a heating cable inlet for receiving a heating cable, such that the heating cable inlet is sealed, preferably with a grommet, such that it is air-tight and the pressurizing head connector accommodates the heating cable inlet at the pressurized air connection or in a separate connector. The heating cable produces heat inside the lining when in use and thus it speeds up the curing of the resin saturated on the lining.

The pressurizing head according to the first aspect of the invention may comprise a pressurizing head connector according to the second aspect of the invention. Then pressurizing head connector is suited to provide heating inside the lining via the pressurized air connection with the heating cable.

### List of drawings

In the following, the pressurizing head and pressurizing head connector are described in more detail in the attached drawings, of which show:
- FIG 1: schematically presents a partial cross section view of an embodiment of a pressurizing head,
- Fig 2A: presents a side view of an embodiment of a pressurizing head,
- Fig 2B: presents a cross sectional view along line A-A of the embodiment presented in Fig 2A,
- Fig 3: presents a pressurizing head that has been provided with connectors,
- Fig 4A: an embodiment of a pressurizing head with an instrumentation,
- Fig 4B: an embodiment of a pressurizing head with a lining,
- Fig 5A: presents an embodiment of a pressurizing head,
- Fig 5B: presents an embodiment having an electric heating system for curing a lining,
- Fig 6A: presents an embodiment of a cap section,
- Fig 6B: presents an embodiment of a cap section,
- Fig 7: presents an embodiment of a pressurizing head.

Same reference numerals refer to same parts in all FIG.

### Detailed description

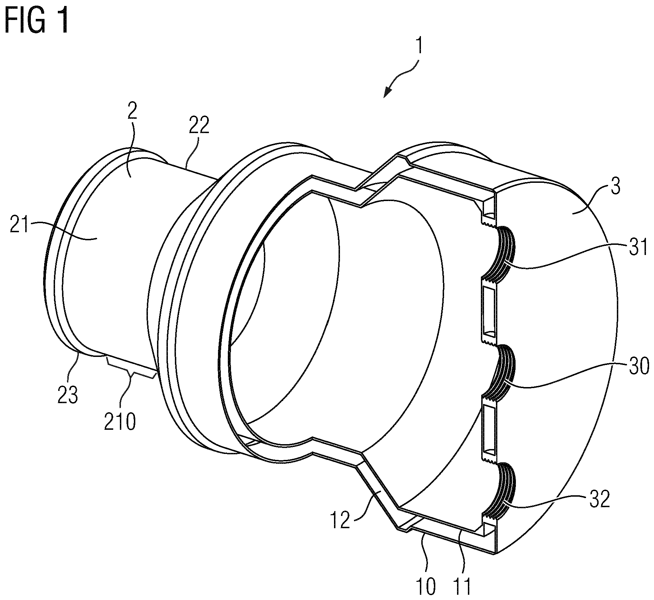

In Fig. 1 it is schematically presented a partial cross section view of an embodiment of a pressurizing head 1 for linings, such as for used in pipe renovation by cured-in-place-pipe - technology (CIPP), wherein:
- the pressurizing head 1 comprises a hollow lining connection section 2 that has:
   i) a lining receiving section 21 onto which a lining, such as used in pipe renovation by cured-in-place-pipe -technology (CIPP), may be inserted,
   ii) the lining receiving section 21 having a tightening section 210 where the outer surface has an essentially cylindrical surface such that the lining may be fastened in an air- and water-tight manner using a ring clamp, for example, and
   iii) a protrusion/notch 23 following the outer perimeter 22 of the lining receiving section 21 and neighboring the tightening section 210, for preventing slip of the lining from the lining receiving section 21;
- the pressurizing head 1 further comprising a cap section 3 closing the pressurizing head 1, wherein the cap section 3 comprises at least one connection 30, 31 for a pressurized air line and/or at least one connection 32 for a water line; wherein:
   a) the pressurizing head 1 comprises or consists of a monolithic structure that forms a body of the cap section 3 and the lining receiving section 2 such that the monolithic structure comprises an outer shell 10, an inner shell 11 connected to each other;
   b) the at least one connection 30, 31, 32 configured for a connector 34, 35, 36 (not shown in Fig. 1), preferably a metallic connector, that is air-tightly sealed to the monolithic structure; (not shown in Fig. 1) and
   c) between the outer shell 10 and the inner shell 11 is an infill 12 that is located at least at the tightening section 210 and/or at the cap section 3 but preferably also between these, to stabilize the tightening section and the connector 34, 35, 36 of the at least one connection 30, 31, 32.

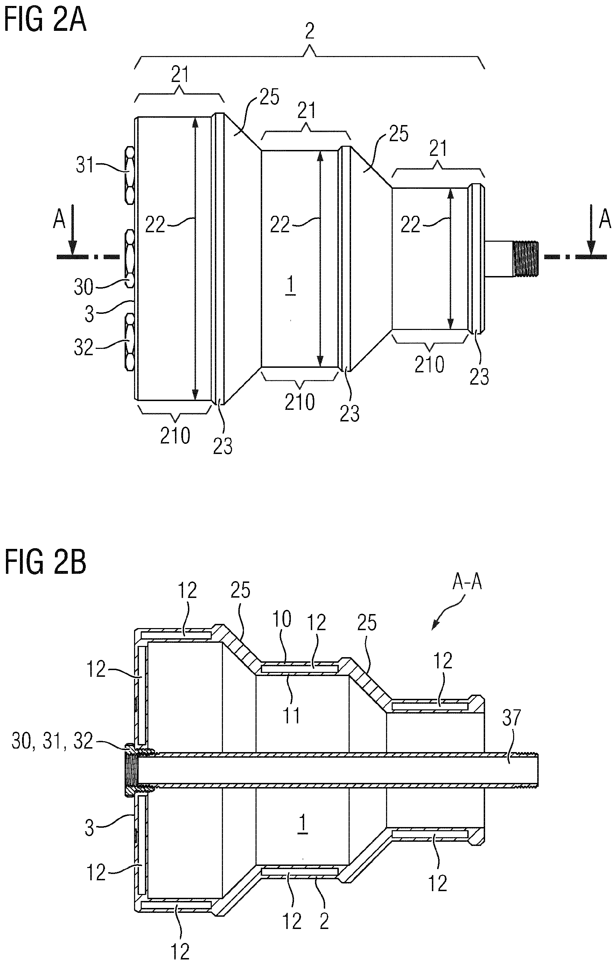

Fig. 2A presents a side view of an embodiment of a pressurizing head 1 for linings, such as for used in pipe renovation by cured-in-place-pipe -technology (CIPP), the lining receiving section 21 comprises a sequence of three different diameter sections, but some other embodiments may comprise at least two different diameters sections, preferably two or three different diameter sections, for different diameter linings, preferably in a range of 30 - 300 mm, for example selected from linings made to nominal diameters DN100, DN150 and DN 200.
- the pressurizing head 1 comprises a hollow lining connection section 2 that has:
   i) a lining receiving section 21 onto which a lining, such as used in pipe renovation by cured-in-place-pipe -technology (CIPP), may be inserted,
   ii) the lining receiving section 21 having a tightening section 210 where the outer surface has an essentially cylindrical surface such that the lining may be fastened in an air- and water-tight manner using a ring clamp, for example, and
   iii) a protrusion/notch 23 following the outer perimeter 22 of the lining receiving section 21 and neighboring the tightening section 210, for preventing slip of the lining from the lining receiving section 21;
- the pressurizing head 1 further comprising a cap section 3 closing the pressurizing head 1, wherein the cap section 3 comprises at least one connection 30, 31, 32 for water or pressurized air. In some embodiments, there may be at least one or more additional connection(s) 30, 31, 32 for water and/or pressurized air.

In Fig 2B it is presented a cross sectional view along line A-A of the embodiment presented in Fig 2A:
a) the pressurizing head 1 comprises or consists of a monolithic structure that forms a body of the cap section 3 and the lining receiving section 2 such that the monolithic structure comprises an outer shell 10, an inner shell 11 connected to each other. Between the outer shell 10 and the inner shell 11 is an infill 12 that is located at least at the tightening section 210 and/or at the cap section 3 but preferably also between these, to stabilize the tightening section and the at least one connection 30, 31, 32 for the connector (33, 34, 35, not shown in Fig 2B). The infill 12 may comprise filled space regions and/or empty space regions. The filled space regions may be filled with suitable curable resin, such as epoxy or hardenable foam such as urethane foam. Preferably the cavity for infill 12 is filled by cast or injection so that the cured infill forms a solid structure. As an other alternative, the infill 12 may comprise empty space regions. These may be made by the same 3D printer that prints the outer shell 10 and the inner shell 11, by creating a mesh like or honeycomb like structure as the infill 12. The infill 12 may absorb deformation of the outer shell 10 enabling outer shell 10 to be flexible to facilitate obtaining an air-tight or water-tight fastening of the lining by means of a ring clamp (not shown in the Fig. 2B).

In Fig. 2B it is presented an embodiment, wherein the cap section 3 comprises a hole surpassing the inner shell 11, the infill 12 and the outer shell 10, (inner shell 11 and outer shell 10 continues to both sides of the infill 12 shown in Fig. 2B) and having a thread, to which the connection 30, 31, 32, preferably metallic connection 30, 31, 32 has been glued to implement the air-tight and/or water-tight sealing.

In the Fig. 2B it is also shown an embodiment of water connection wherein the water inlet is connected to a central pipe 37 that will be connected to a hose (not shown) for supplying water inside the lining (not shown in Fig. 2B). This configuration having a central pipe 37 is preferably used in all those applications where the curing media, such as water, steam, heated air, etc. is conducted along a hose to a remote end of the lining.

In Fig. 2A and 2B it is also shown an embodiment wherein the lining receiving section 21 comprises a sequence of three different diameter sections and the smallest diameter section is furthest from the cap section 3 and the largest diameter section is closest to the cap section 3. Between the different diameter sections, the inner shell 11, the outer shell 10 have a tapering form 25 to implement a funnel-like shape. This enables easy and smooth assembly of the lining on the pressurizing head 1 for use and also provides durable construction to be pressurized internally. Still in addition, this is very manufacturing friendly shape especially for 3D printing.

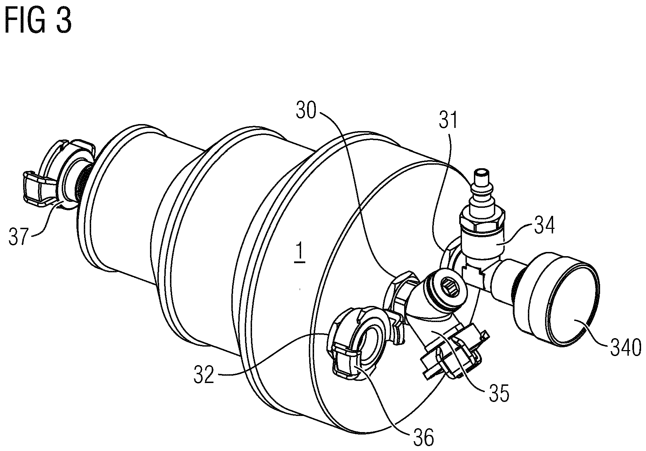

In Fig. 3 it is presented a pressurizing head 1 that has been provided with connectors: connector 34 , T piece for pressurized air and pressure gauge 340; connector 35, water in and possible some other instrumentation, connector 36, water out. Theses have been attached to the corresponding connections 30, 31, 32 at the pressurizing head 1. At the other end of the pressurizing head 1 a part of the central pipe 37 is visible.

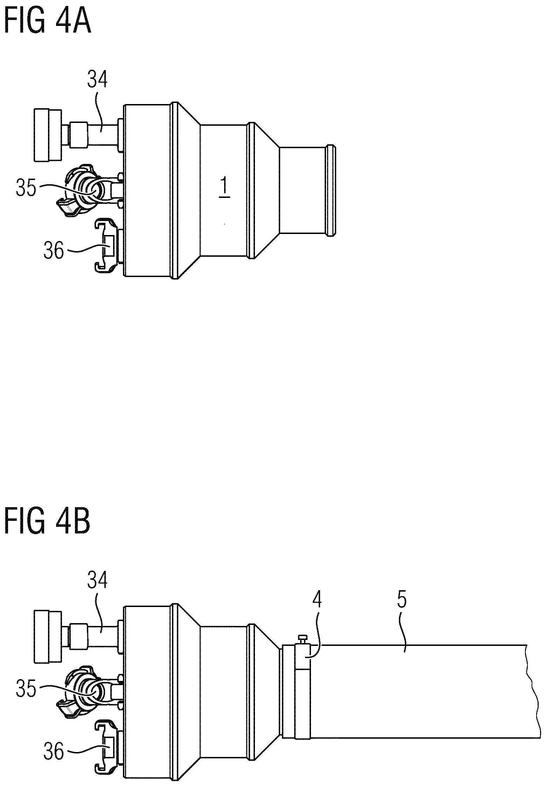

In Fig. 4A it is shown an embodiment of the pressurizing head with essentially the same instrumentation 34, 35, 36 as in Fig. 3 and in Fig 4B it is shown a the same as in Fig 4A but a lining 5 fastened to the pressurizing head 1 with a ring clamp 4.

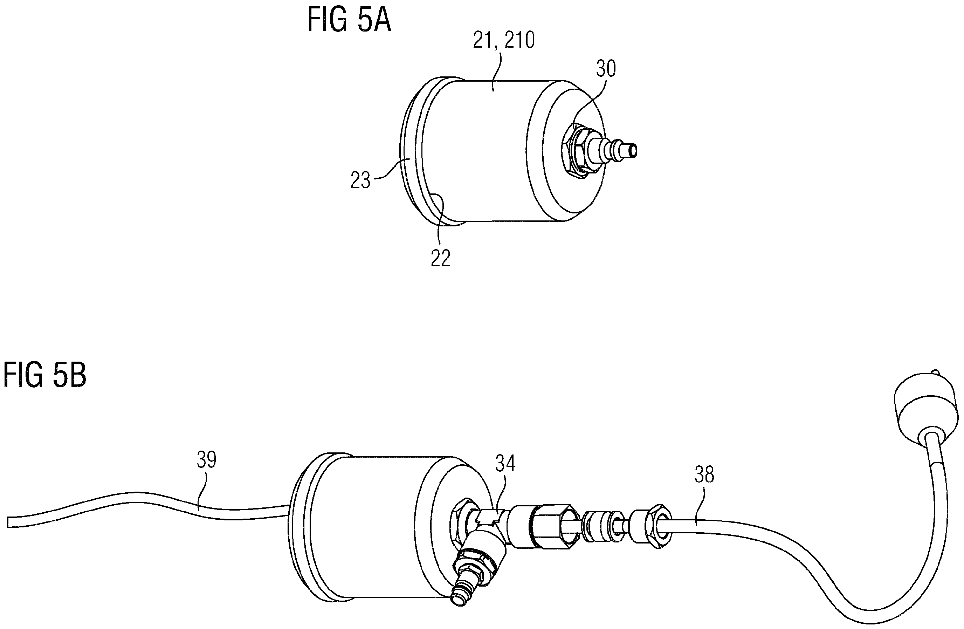

In Fig. 5A and Fig 5B it is presented an embodiment of the pressurizing head 1. This is adapted for only one size of lining as there are only one diameter wherein the lining receiving section 21 having a tightening section 210 where the outer surface has an essentially cylindrical surface such that the lining may be fastened in an air- and water-tight manner. A protrusion/notch 23 following the outer perimeter 22 of the lining receiving section 21, for preventing slip of the lining from the lining receiving section 21.

In the Fig 5B it is presented an embodiment having an electric heating system for curing the lining. This embodiment comprises one connection 30. The pressurizing head 1 is provided with a connector 34 having both pressurizer air and an electric heating cable 38, 39 so that the inlet is sealed, preferably with a grommet, such that it is air-tight and the pressurizing head connector accommodates the heating cable inlet at the pressurized air connection (or in a separate connector, not shown in Fig 5B). The pressurizing head connector may comprise a body having a thread comprising a pressurized air inlet and an electric cable inlet for receiving a heating cable 38, 39, such that the electric cable inlet is sealed, such as with a grommet, so that it is air-tight, and the pressurizing head connector accommodates the heating cable inlet at the pressurized air connection. The pressurizing head connector 34 is suited to provide heating inside the lining via the pressurized air connection with the heating cable 38, 39.

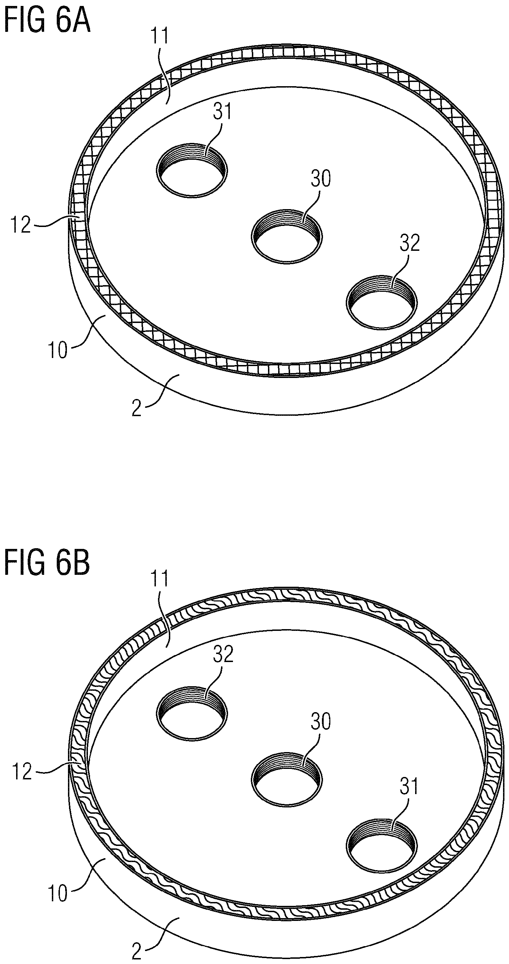

In Figs. 6A and 6B it is presented some embodiments of a cap section 3 as they would be while manufacturing by 3D printing. The lining connection section 2 has not yet been printed but only a small wall has arisen upwards. In these embodiments shown, especially between the outer shell 10 and inner shell 11, a possible infill 12 structure has been schematically visualized. The infill 12 may be a mesh like pattern or a honeycomb type wall structure between the outer shell 10 and the inner shell 11.

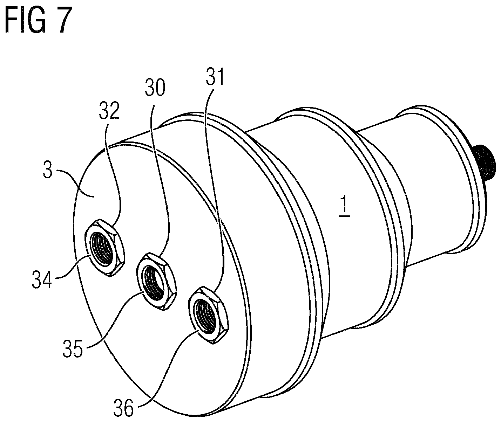

In Fig 7 it is presented an embodiment of the pressurizing head 1, a bushing type connection 30, 31, 32 is configured for the connector 34, 35, 36. Connections 30, 31, 21 are installed/configured in a recess in the outer side of the cap section 3, which recess and connection 30, 31, 32 for connector 34, 35, 36 preferably have a shape that facilitates form locking of the connection 30, 31, 32 in place, and preferably a counterpiece, especially a screw nut that is installed in the inner side of the cap section 3 such that the connector 34, 35, 36 and optionally also the counterpiece spans through the outer shell 10 and the inner shell 11 (not shown in Fig. 7). The cap section 3 comprises a hole surpassing the inner shell 11, the infill 12 and the outer shell 10, and having a thread, to which the metallic bushing connection 30, 31, 32 has been glued to implement the air-tight and/or water-tight sealing (as shown in Fig 2B).

### List of reference numerals used:

- 1: pressurizing head
- 10: outer shell of the cell structure
- 11: inner shell of the cell structure
- 12: infill structure

- 2: lining connection section
- 21: lining receiving section
- 210: tightening section
- 22: outer perimeter
- 23: protrusion / notch
- 24: sequential diameters
- 25: funnel-like tapering form

- 3: cap section
- 30: connection
- 31: connection
- 32: connection
- 34: connector, T piece
- 340: pressure gauge
- 35: connector, water in
- 36: connector, water out
- 37: central pipe
- 38: heating cable (electrical heating cable, the end that is connected to the mains)
- 39: heating cable (electrical heating cable, the end that is entered into the lining)
- 4: ring clamp
- 5: lining

## Claims

1. A pressurizing head (1) for linings, such as for used in pipe renovation by cured-in-place-pipe -technology (CIPP), **wherein:**
- the pressurizing head (1) comprises a hollow lining connection section (2) that has:
i) a lining receiving section (21) onto which a lining (5), such as used in pipe renovation by cured-in-place-pipe -technology (CIPP), may be inserted,
ii) the lining receiving section (21) having a tightening section (210) where the outer surface has an essentially cylindrical surface such that the lining (5) may be fastened in an air- and water-tight manner using a ring clamp, for example, and
iii) a protrusion/notch (23) following the outer perimeter (22) of the lining receiving section (21) and neighboring the tightening section (210), for preventing slip of the lining from the lining receiving section (21);
- the pressurizing head (1) further comprising a cap section (3) closing the pressurizing head (1), wherein the cap section (3) comprises at least one connection (30, 31, 32) for water or pressurized air ;
wherein:
a) the pressurizing head (1) comprises or consists of a monolithic structure that forms a body of the cap section (3) and the lining receiving section (2) such that the monolithic structure comprises an outer shell (10), an inner shell (11) connected to each other;
b) the at least one connection (30, 31, 32) configured for a connector (34, 35, 36), preferably a metallic connector, that is air-tightly sealed to the monolithic structure; and
c) between the outer shell (10) and the inner shell (11) is an infill (12) that is located at least at the tightening section (210) and/or at the cap section (3) but preferably also between these, to stabilize the tightening section and the connector (34, 35, 36) of the at least one connection (30, 31, 32).

2. The pressurizing head (1) according to claim 1, **wherein:** the infill (12) comprises filled space regions and/or empty space regions.

3. The pressurizing head (1) according to claim 2, **wherein:** the infill (22) absorbs deformation of the outer shell (20) enabling outer shell (20) to be flexible to facilitate obtaining an air-tight or water-tight fastening of the lining by means of a ring clamp ().

4. The pressurizing head (1) according to any one of the preceding claims, **wherein:** the monolithic structure comprises plastics, preferably polyethylene terephthalate glycol (PETG).

5. The pressurizing head (1) according to claim 4, **wherein:** the plastics is fiber reinforced, preferably carbon fiber reinforced plastics.

6. The pressurizing head (1) according to any one of the preceding claims, **wherein:** the monolithic structure is manufactured using 3D printing.

7. The pressurizing head (1) according to claim 6, **wherein:** the 3D printing has been carried out using fiber reinforced plastic filament, preferably carbon fiber reinforced PETG.

8. The pressurizing head (1) according to any one of the preceding claims, **wherein:** the connection (30, 31, 32) is installed in a recess in the outer side of the cap section (3), which recess and connection (30, 31, 32) preferably have a shape that facilitates form locking of the connection (30, 31, 32) in place, and preferably a counterpiece, especially a screw nut that is installed in the inner side of the cap section (3) such that the connection (30, 31, 32) and optionally also the counterpiece spans through the outer shell (10) and the inner shell (11).

9. The pressurizing head (1) according to any one of the preceding claims 1-7, **wherein:** the cap section (3) comprises a hole surpassing the inner shell (11), the infill (12) and the outer shell (10), and having a thread, to which the connection (30, 31, 32), preferably metallic connection (30, 31, 32) has been glued to implement the air-tight and/or water-tight sealing.

10. The pressurizing head (1) according to any one of the preceding claims, **wherein:** the lining receiving section (21) comprises a sequence of at least two different diameters sections, preferably two or three different diameter sections, for different diameter linings, preferably in a range of 30 - 300 mm, for example selected from linings made to nominal diameters DN100, DN150 and DN 200.

11. The pressurizing head (1) according to claim 10, **wherein:** the smallest diameter section is furthest from the cap section (3) and the largest diameter section is closest to the cap section (3).

12. The pressurizing head (1) according to claim 10 or 11, **wherein:** between the different diameter sections, the inner shell (11), the outer shell (10) have a tapering form (25) to implement a funnel-like shape, preferably funnel-like shape is in an angle of 45° ± 15° in relation to the central axis of the rotationally symmetrical pressurizing head..

13. A pressurizing head (1) according to any one of the preceding claims, further **comprising:** a lining (5) is attached to a lining receiving section (2) and secured in place by a ring clamp (4).

14. A pressurizing head (1) according to any one of the preceding claims, **wherein:** the pressurizing head (1) is used in pipe renovation by cured-in-place-pipe -technology (CIPP) to pressurize pipe linings (5) by air or to circulate water therein.

15. A pressurizing head connector (34) for a pressurizing head (1), preferably according to any one of the preceding claims, **wherein:** the pressurizing head connector (34) comprises a body having a thread comprising a pressurized air inlet and a heating cable (38, 39) inlet for receiving a heating cable (38, 39), such that the heating cable (38, 39) inlet is sealed, preferably with a grommet, such that it is air-tight, and the pressurizing head connector accommodates the heating cable inlet at the pressurized air connection or in a separate connector.

16. A pressurizing head (1) according to any one of the preceding claims 1 - 14, comprising a pressurizing head connector (34) according to claim 15, **wherein:** the pressurizing head connector (34) is suited to provide heating inside the lining via the pressurized air connection with the heating cable (38, 39).
